# EUROPÄISCHE PATENTSCHRIFT

(11) **EP 0 832 004 B1**
(45) Veröffentlichungstag und Bekanntmachung des Hinweises auf die Patenterteilung: **04.10.2001**
(21) Anmeldenummer: 97907019.0
(22) Anmeldetag: 28.01.1997
(51) Int. Cl.: B60J 7/057, B60R 16/02

(54) **VORRICHTUNG UND VERFAHREN ZUR SCHLIESSKRAFTBEGRENZUNG EINES VERSTELLANTRIEBS ZUM SCHLIESSEN EINER IN EINEM FAHRZEUG ANGEORDNETEN ÖFFNUNG**
DEVICE AND PROCESS TO RESTRICT THE CLOSING PRESSURE OF AN ADJUSTMENT DRIVE FOR CLOSING AN OPENING IN A VEHICLE
DISPOSITIF ET PROCEDE POUR LIMITER LA FORCE DE SERRAGE D'UNE COMMANDE DE REGLAGE POUR FERMER UNE OUVERTURE DISPOSEE DANS UN VEHICULE

(30) Priorität: 23.03.1996 DE 19611535
(43) Veröffentlichungstag der Anmeldung: 01.04.1998
(73) Patentinhaber: ROBERT BOSCH GMBH, 70442 Stuttgart (DE)
(72) Erfinder: HADERER, Günter, D-77815 Bühl (DE)
(86) Internationale Anmeldenummer: DE9700140
(87) Internationale Veröffentlichungsnummer: WO9735736

(56) Entgegenhaltungen:
- DE-A- 4 020 351
- DE-A- 4 023 500
- US-A- 4 644 235

## Beschreibung

### Stand der Technik

Die Erfindung geht aus von einer Vorrichtung und einem Verfahren zur Schließkraftbegrenzung eines Verstellantriebs zum Schließen einer in einem Fahrzeug angeordneten Öffnung. Aus der gattungsbildenden DE-A 40 20 351 ist schon ein Verfahren zur elektronischen Überwachung und Steuerung des Öffnungs- und Schließvorgangs von elektrisch betriebenen Aggregaten bekannt, bei dem mittels eines zusätzlich zu installierenden Sensors Beschleunigungskräfte, insbesondere in vertikaler Richtung, erfaßt werden. Dadurch besteht die Möglichkeit ein unerwünschtes, durch Einwirken von vertikalen, impulsförmigen Beschleunigungskräften verursachtes Auslösen des Einklemmschutzes zu verringern.

### Vorteile der Erfindung

Die erfindungsgemäße Vorrichtung und das erfindungsgemäße Verfahren zur Schließkraftbegrenzung eines in einem Fahrzeug angeordneten Verstellantriebs haben den Vorteil, daß eine Fehlauslösewahrscheinlichkeit der Schließkraftbegrenzung aufgrund einer Belüftung des Fahrzeuginnenraums stark reduziert wird, da dadurch auch die geschwindigkeitsabhängigen Kraft- und Druckverhältnisse berücksichtigt werden. Durch die Belüftung des Fahrzeuginnenraums baut sich beispielsweise am Schiebedach ein geringerer Druck auf als dies ohne Belüftung der Fall wäre. Dadurch können Fehlauslösungen, insbesondere bei hohen Fahrzeuggeschwindigkeiten, reduziert werden.

Durch die jeweils in den abhängigen Ansprüchen aufgeführten Maßnahmen sind vorteilhafte Weiterbildungen und Ausgestaltungen möglich.

Bevorzugte Verwendung finden die Vorrichtung und das Verfahren bei einem mittels Schließkraftbegrenzung gesicherten Schiebedach, das geschlossen werden soll und bei dem die Belüftung des Fahrzeuginnenraums über Fensterheber realisiert ist.

### Zeichnung

Ein Ausführungsbeispiel einer erfindungsgemäßen Vorrichtung ist in der Figur dargestellt.

### Beschreibung

In der Figur beinhaltet eine Steuerelektronik 12 eine Anordnung 18 zur Bereitstellung eines Grenzwertes der Schließkraftbegrenzung, die einen Grenzwert 16 der Schließkraftbegrenzung erzeugt. Ein erster Verstellantrieb 15 empfängt von der Steuerelektronik 12 ein Stellsignal 21 an den ersten Verstellantrieb 15 und gibt ein Positionssignal 20 des ersten Verstellantriebs 20 ab. Ein zweiter Verstellantrieb 17 empfängt ein Stellsignal 14 und gibt Rückmeldesignale ab. Eine Sensoranordnung 13 liefert der Steuerelektronik 12 ein Tachosignal 19. Bedienelemente 11 sind mit der Steuerelektronik 12 verbunden.

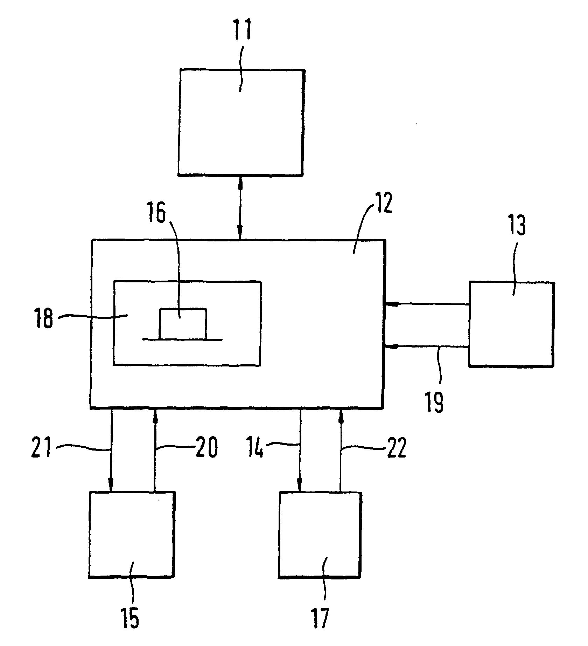

Die in Figur 1 gezeigte Anordnung arbeitet folgendermaßen: Über die Bedienelemente 11 wird der Steuerelektronik 12 die gewünschte Betriebsart, wie zum Beispiel Schließen eines Schiebedachs, mitgeteilt. Abhängig vom ersten Verstellantrieb 15 oder weiter unten beschriebenen Kriterien gibt die Steuerelektronik 12 dem zweiten Verstellantrieb 17 den Befehl, eine der Belüftung des Innenraums dienende Vorrichtung zu betätigen. Zur Belüftung des Innenraums kommen insbesondere die Seitenfenster, das Schiebedach oder eine separate Öffnung im Fahrzeuginnenraum in Frage. Auch die Betätigung von Luftzufuhrklappen der Klimaanlage kommen in Betracht. Seitens der Steuerelektronik 12 kann dem zweiten Verstellantrieb 17 eine zu erreichende Position vorgegeben werden. Durch die vorgeschlagenen Ausführungsformen ist es gewährleistet, daß sich die Druckänderungen, die beispielsweise vom Schließen des Schiebedachs herrühren, dank der Belüftung rasch abbauen können. Die so geminderten Druckänderungen bewirken einen geringeren Kraftaufbau als dies ohne Belüftung der Fall wäre, wodurch das Fehlauslösungsrisiko der Schließkraftbegrenzung reduziert wird.

Der Zeitpunkt der Ansteuerung des zweiten Verstellantriebs 17 kann in Abhängigkeit unterschiedlicher Faktoren bestimmt werden. Das Positionssignal 20 des ersten Verstellantriebs 15 kann von der Steuerelektronik 12 dazu herangezogen werden, daß der zweite Verstellantrieb 17 nur dann angesteuert wird, wenn sich der erste Verstellantrieb 15 innerhalb eines vorgegebenen Bereichs befindet. Dieser die Ansteuerung des zweiten Verstellantriebs 17 zulassende Bereich ist frei wählbar. Ebenso kann eine Ansteuerung des zweiten Verstellantriebs 17 in Abhängigkeit vom Zeitpunkt des Betätigens der Bedienelemente 11 realisiert werden. Gibt beispielsweise das Bedienelement 11 der Steuerelektronik 12 ein Signal zum Schließen des Schiebedachs, so kann der zweite Verstellantrieb 17 zum Zweck der Belüftung entweder sofort oder nach einer Zeitverzögerung angesteuert werden. Auch könnte das Tachosignal 19 zur Ansteuerung des zweiten Verstellantriebs 17 benutzt werden. Da insbesondere bei hohen Geschwindigkeiten sich große Kräfte beispielsweise am Schiebedach aufbauen, ist die Aktivierung des zweiten Verstellantriebs ab einer bestimmten Grenzgeschwindigkeit vorzunehmen.

In einer bevorzugten Verwendung betreibt der erste Verstellantrieb 15 ein Schiebedach und der zweite Verstellantrieb 17 einen Fensterheber oder umgekehrt.

## Patentansprüche

1. Vorrichtung zur Schließkraftbegrenzung eines ersten Verstellantriebs zum Schließen einer in einem Fahrzeug angeordneten Öffnung, **dadurch gekennzeichnet, daß** wenigstens ein zweiter Verstellantrieb (17) vorgesehen ist und **daß** der zweite Verstellantrieb (17) zum Betätigen einer Belüftung des Fahrzeuginnenraums von einer Steuerelektronik (12) in Abhängigkeit vom ersten Verstellantrieb (15) angesteuert ist.

2. Vorrichtung nach Anspruch 1, **dadurch gekennzeichnet, daß** die Ansteuerung des zweiten Verstellantriebs (17) in Abhängigkeit von der Position des ersten Verstellantriebs (15) erfolgt.

3. Vorrichtung nach Anspruch 1, **dadurch gekennzeichnet, daß** die Vorrichtung Bedienelemente besitzt, und **daß** die Ansteuerung des zweiten Verstellantriebs (17) in Abhängigkeit von einer Betätigung der Bedienelemente (11) erfolgt.

4. Vorrichtung nach Anspruch 1, **dadurch gekennzeichnet, daß** die Ansteuerung des zweiten Verstellantriebs (17) in Abhängigkeit von der Fahrzeuggeschwindigkeit und dem ersten Verstellantrieb (15) erfolgt.

5. Vorrichtung nach einem der Ansprüche 1 bis 4, **gekennzeichnet durch** Verwendung des ersten Verstellantriebs (15) bei einem Schiebedach und des zweiten Verstellantriebs (17) bei einem Fensterheber.

6. Vorrichtung nach einem der Ansprüche 1 bis 4, **gekennzeichnet durch** Verwendung des ersten Verstellantriebs bei einem Fensterheber und des zweiten Verstellantriebs (17) bei einem Schiebedach.

7. Verfahren zur Schließkraftbegrenzung eines ersten Verstellantriebs zum Schließen einer in einem Fahrzeug angeordneten Öffnung, **dadurch gekennzeichnet, daß** wenigstens ein zweiter Verstellantrieb (17) vorgesehen wird und **daß** der zweite Verstellantrieb zum Betätigen einer Belüftung des Fahrzeuginnenraums von einer Steuerelektronik (12) in Abhängigkeit vom ersten Verstellantrieb (15) angesteuert wird.

8. Verfahren nach Anspruch 7, **dadurch gekennzeichnet, daß** die Ansteuerung des zweiten Verstellantriebs (17) in Abhängigkeit von der Position des ersten Verstellantriebs (15) erfolgt.

9. Verfahren nach Anspruch 7, **dadurch gekennzeichnet, daß** die Ansteuerung des zweiten Verstellantriebs (17) in Abhängigkeit vom Betätigungszeitpunkt der Bedienelemente (11) erfolgt.

10. Verfahren nach Anspruch 7, **dadurch gekennzeichnet, daß** die Ansteuerung des zweiten Verstellantriebs (17) in Abhängigkeit von der Fahrzeuggeschwindigkeit und dem ersten Verstellantrieb (15) erfolgt.

## Claims

1. Device for restricting the closing force of a first adjusting drive for closing an opening arranged in a vehicle, **characterized in that** at least one second adjusting drive (17) is provided, and **in that** the second adjusting drive (17) is activated by a controlling electronic unit (12) as a function of the first adjusting drive (15) for the purpose of actuating ventilation of the vehicle interior.

2. Device according to Claim 1, **characterized in that** the second adjusting drive (17) is activated as a function of the position of the first adjusting drive (15).

3. Device according to Claim 1, **characterized in that** the device has control elements, and **in that** the second adjusting drive (17) is activated as a function of an actuation of the control elements (11).

4. Device according to Claim 1, **characterized in that** the second adjusting drive (17) is activated as a function of the vehicle speed and the first adjusting drive (15).

5. Device according to one of Claims 1 to 4, **characterized by** use of the first adjusting drive (15) in a sliding roof and of the second adjusting drive (17) in a window opener.

6. Device according to one of Claims 1 to 4, **characterized by** use of the first adjusting drive in a window opener and of the second adjusting drive (17) in a sliding roof.

7. Method for restricting the closing force of a first adjusting drive for closing an opening arranged in a vehicle, **characterized in that** at least one second adjusting drive (17) is provided, and **in that** the second adjusting drive is activated by a controlling electronic unit (12) as a function of the first adjusting drive (15) for the purpose of actuating ventilation of the vehicle interior.

8. Method according to Claim 7, **characterized in that** the second adjusting drive (17) is activated as a function of the position of the first adjusting drive (15).

9. Method according to Claim 7, **characterized in that** the second adjusting drive (17) is activated as a function of the actuating instant of the control element (11).

10. Method according to Claim 7, **characterized in that** the second adjusting drive (17) is activated as a function of the vehicle speed and the first adjusting drive (15).

## Revendications

1. Dispositif pour limiter la force de fermeture d'un entraînement de réglage pour fermer une ouverture disposée dans un véhicule,
**caractérisé en ce qu'**
il est prévu au moins un second entraînement de réglage (17) qui, pour créer une ventilation de l'habitacle du véhicule, est actionné par une électronique de commande (12) en fonction du premier entraînement de réglage (15).

2. Dispositif selon la revendication 1,
**caractérisé en ce que**
l'actionnement du second entraînement de réglage (17) s'effectue en fonction de la position du premier entraînement de réglage (15).

3. Dispositif selon la revendication 1,
**caractérisé en ce que**
le dispositif possède des organes de manoeuvre, et l'actionnement du second entraînement de réglage (17) a lieu en fonction d'un actionnement des organes de manoeuvre (11).

4. Dispositif selon la revendication 1,
**caractérisé en ce que**
l'actionnement du second entraînement de réglage (17) s'effectue en fonction de la vitesse du véhicule et du premier entraînement de réglage (15).

5. Dispositif selon l'une quelconque des revendications 1 à 4,
**caractérisé en ce que**
le premier entraînement de réglage (15) est utilisé avec un toit coulissant tandis que le second entraînement de réglage (17) est utilisé avec un lève-glace.

6. Dispositif selon l'une quelconque des revendications 1 à 4,
**caractérisé en ce que**
le premier entraînement de réglage (15) est utilisé pour un lève-glace tandis que le second entraînement de réglage (17) est utilisé pour un toit coulissant.

7. Procédé pour limiter la force de fermeture d'un entraînement de réglage pour fermer une ouverture disposée dans un véhicule,
**caractérisé en ce qu'**
il est prévu au moins un second entraînement de réglage (17) qui, pour créer une ventilation de l'habitacle du véhicule, est actionné par une électronique de commande (12) en fonction du premier entraînement de réglage (15).

8. Procédé selon la revendication 7,
**caractérisé en ce que**
l'actionnement du second entraînement de réglage (17)
s'effectue en fonction de la position du premier entraînement de réglage (15).

9. Procédé selon la revendication 7,
**caractérisé en ce que**
l'actionnement du second entraînement de réglage (17)
s'effectue en fonction de l'instant d'actionnement des organes de manoeuvre (11).

10. Procédé selon la revendication 7,
**caractérisé en ce que**
l'actionnement du second entraînement de réglage (17) s'effectue en fonction de la vitesse du véhicule et du premier entraînement de réglage (15).
